# EUROPEAN PATENT APPLICATION

(11) **EP 2 696 576 A1**
(43) Date of publication of application: **12.02.2014**
(21) Application number: 13173434.5
(22) Date of filing: 24.06.2013
(51) Int. Cl.: H04N 5/445, H04N 21/485

(54) **Image processing apparatus and control method thereof**

(30) Priority: 10.08.2012 KR 20120087650
(71) Applicant: Samsung Electronics Co., Ltd, Gyeonggi-do 443-742 (KR)
(72) Inventor: Kim, Won-il, Gyeonggi-do (KR); Kim, Jong-seo, Seoul (KR); Shin, Jung-hoon, Gyeonggi-do (KR); Lee, Bum-jin, Gyeonggi-do (KR)
(74) Representative: Brandon, Paul Laurence

(57) **Abstract**

An image processing apparatus including: a connector that receives signals from external inputs; a signal processor that detects if a signal is received by the connector; and a controller that displays a set-up guide according to the kind of signal detected on the connector.

## Description

### BACKGROUND

### Field

Apparatuses and methods consistent with exemplary embodiments relate to an image processing apparatus, and a control method which is received from an external input, and processes an image signal to display an image based on the processed image signal. More particularly, exemplary embodiments relate to an image processing apparatus, and a control method which improves a structure for setting a connection of the image processing apparatus to an external input environment, such as an external network connection.

### Description of the Related Art

An image processing apparatus collectively refers to devices which process image signals supplied from outside, by various methods to display images based on the processed image signals. The image processing apparatus may include a display panel. The image processing apparatus which does not include the display panel outputs the processed image signal to another display apparatus, to display an image based on the processed image signal. For example, a set-top box belongs to this kind of image processing apparatus. The image processing apparatus which includes the display panel displays an image on its display panel, based on the processed image signal. An example of this kind of image processing apparatus is a TV or a monitor.

Even if image processing apparatuses are identical models, the environment in which users use the image processing apparatuses is different. Accordingly, when a user initially uses the image processing apparatus, the image processing apparatus provides an initial setting service for a user to initially set functions of the image processing apparatus. The initial setting service may include a step-by-step setting input method implemented through a user interface (UI), and the image processing apparatus may initially set its various functions by inputting settings through the UI.

However, as the image processing apparatus performs more functions, the number of steps and Uls which should be set by a user increases, and this causes inconvenience to a user, and an increase in setting time.

### SUMMARY

An aspect of an exemplary embodiment may provide an image processing apparatus including: a connector which receives a signal in at least one external input; a signal processor which processes the signal received by the connector, according to a preset process, and displays an image on a display unit based on the processed signal; and a controller which displays a guide image which guides a user to connect the at least one external input to the connector, sequentially displays on the display unit a setting image of the at least one external input to sequentially perform a connection setting for the connector to receive the signal from the at least one external input after the guide image is displayed, detects a signal input characteristic of a first external input of the at least one external input connected to the connector after the guide image is displayed, and selectively displays the setting image corresponding to the first external input according to the detection result.

The controller may automatically perform the connection setting according to the detection result, rather than displaying the setting image corresponding to the first external input, when the setting image of the at least one external input is sequentially displayed.

The first external input may include a wired network connection or a wireless network connection, and the controller may perform the connection setting of a wired network and the image processing apparatus, rather than displaying a first setting image for setting a network connection if it is detected that the wired network is connected to the connector, and may display a second setting image for setting the wireless network connection of the image processing apparatus if it is detected that a wireless network is connected to the connector.

The controller may display the first setting image if it is detected that the wired network or the wireless network is not connected to the connector, and may set the network connection of the image processing apparatus according to an input through the first setting image.

The controller may do not display the first setting image and does not set the network connection of the image processing apparatus if it is detected that the wired network or the wireless network is not connected to the connector.

The first setting image may be provided to select one of the wired network and the wireless network.

The controller may display a third setting image for receiving a user input regarding the connection setting of the network connection if it is detected that the wired network or the wireless network is not connected to the connector.

The first external input may include a reception cable connection of a broadcasting signal, and the controller may display a fourth setting image for setting a channel list based on the broadcasting signal if it is detected that the reception cable of the broadcasting signal is connected to the connector, and may skip displaying the fourth setting image if it is detected that the reception cable of the broadcasting signal is not connected to the connector.

The image processing apparatus may further including a user input unit, wherein the controller may progress from the guide image to the one of a plurality of setting images or progress from the one of the plurality of setting images to another one of the plurality of setting images, according to manipulation of the user input unit.

Another aspect of the exemplary embodiments may provide a control method of an image processing apparatus including: displaying a guide image which guides a user to connect at least one external input to a connector which receives a signal in the at least one external input; sequentially displaying a setting image of the at least one external input to sequentially perform a connection setting so that the connector receives the signal from the at least one external input; detecting a signal input characteristic of a first external input of the at least one external input connected to the connector after the guide image is displayed; and selectively displaying the setting image corresponding to the first external input according to the detection result.

The selectively displaying the setting image corresponding to the first external input according to the detection result may include automatically performing the connection setting according to the detection result, rather than displaying the setting image corresponding to the first external input.

The first external input may include a wired network connection or a wireless network connection, and the selectively displaying the setting image corresponding to the first external input according to the detection result may include performing the connection setting between the wired network and the image processing apparatus, rather than displaying a first setting image for setting a network connection if it is detected that the wired network is connected to the connector, and displaying a second setting image for setting the wireless network connection of the image processing apparatus if it is detected that the wireless network is connected to the connector.

The selectively displaying the setting image corresponding to the first external input according to the detection result may further include displaying the first setting image if it is detected that the wired network or the wireless network is not connected to the connector, and setting the network connection of the image processing apparatus according to an input through the first setting image.

The selectively displaying the setting image corresponding to the first external input according to the detection result may further include not displaying the first setting image and not setting the network connection of the image processing apparatus if it is detected that the wired network or the wireless network is not connected to the connector.

The first setting image may be provided to select one of the wired network and the wireless network.

The selectively displaying the setting image corresponding to the first external input according to the detection result may further include displaying a third setting image provided to receive whether to set the network connection if it is detected that the wired network or the wireless network is not connected to the connector.

The first external input may include a reception cable connection of a broadcasting signal, and the selectively displaying the setting image corresponding to the first external input according to the detection result may include displaying a fourth setting image for setting a channel list based on the broadcasting signal if it is detected that the reception cable of the broadcasting signal is connected to the connector, and skipping displaying the fourth setting image if it is detected that the reception cable of the broadcasting signal is not connected to the connector.

Another aspect of the exemplary embodiment may provide a control method of an image forming apparatus including: starting an initial setting service; displaying a guide image for setting at least one step; detecting a signal input characteristic of at least one external input connected to the image forming apparatus when each of the at least one step have been set; and selectively displaying a setting image corresponding to each of the at least one step set, based on the detected signal input characteristic.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 illustrates an example of an image processing apparatus according to an embodiment;

FIG. 2 is a block diagram of the image processing apparatus in FIG. 1;

FIG. 3 illustrates an example of steps for setting a plurality of functions for an initial setting service of the image processing apparatus in FIG. 1;

FIG. 4 illustrates an example of a method for setting steps for the initial setting service in FIG. 3 according to the embodiment;

FIGS. 5 to 9 illustrate an example of setting images corresponding to the respective steps in FIG. 4; and

FIG. 10 is a control flowchart showing a control method of the image processing apparatus in FIG. 1.

### DETAILED DESCRIPTION OF EXEMPLARY EMBODIMENTS

Exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

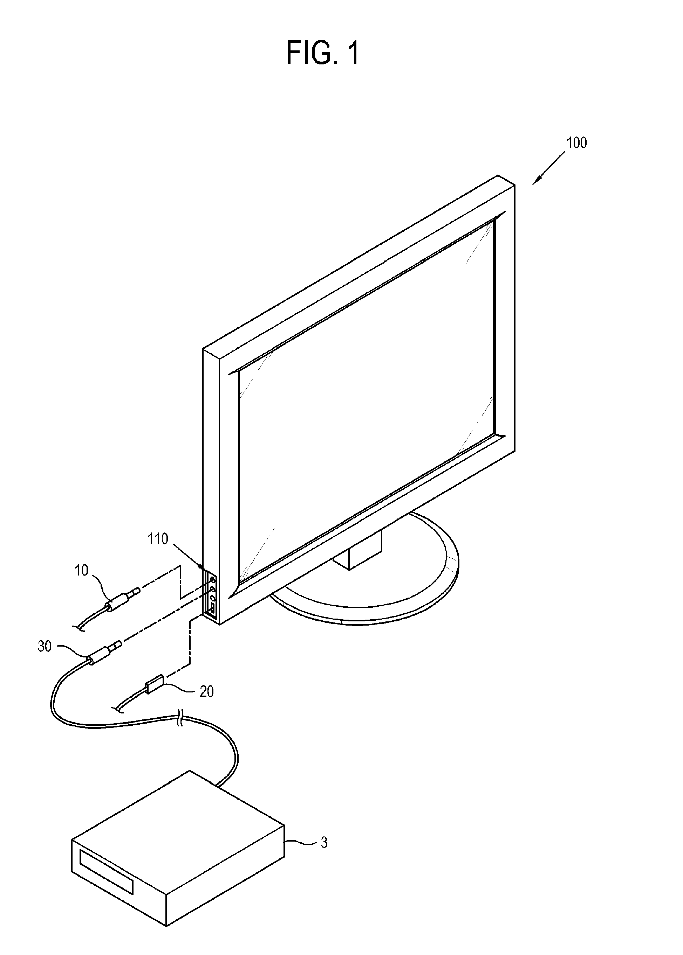

FIG. 1 illustrates an example of an image processing apparatus 100 according to an embodiment.

As shown therein, the image processing apparatus 100 according to the present embodiment is implemented as a display apparatus, such as a TV, displaying an image.

The image processing apparatus 100 is connected to various external inputs, and receives various types of signals from the outside. For example, upon receiving a broadcasting signal from the outside, the image processing apparatus 100 tunes the broadcasting signal to a particular channel, processes the broadcasting signal according to preset various processes, and displays a broadcasting image of the particular channel.

To connect to the external input environment, the image processing apparatus 100 includes a connector 110 which is installed at an external side of the image processing apparatus 100, and is connected to various external input cables 10, 20 and 30. The external input which is connected to the connector 110 varies, e.g., an high definition multimedia interface (HDMI) or component cable 10 for a broadcasting signal transmitted by a transmission apparatus (not shown) of a broadcasting station, a communication cable 20 for connecting to a communication network such as the Internet, or a cable 30 which is locally connected to various external devices 3, such as a set-top box or an optical media player, such as DVD and Blue Ray.

In FIG. 1, the wired cables 10, 20 and 30 are connected to the connector 110 so that the image processing apparatus 100 is connected to the external input environment. However, the connector 110 may be connected to a communication network through a wireless connection connected to a wireless access point (not shown).

As the connector 110 is connected to the cables 10, 20, and 30, the image processing apparatus 100 may receive signals in various standards, such as image signals/broadcasting signals/communication data from various external input environments, and process the signals corresponding to the standards of the signals.

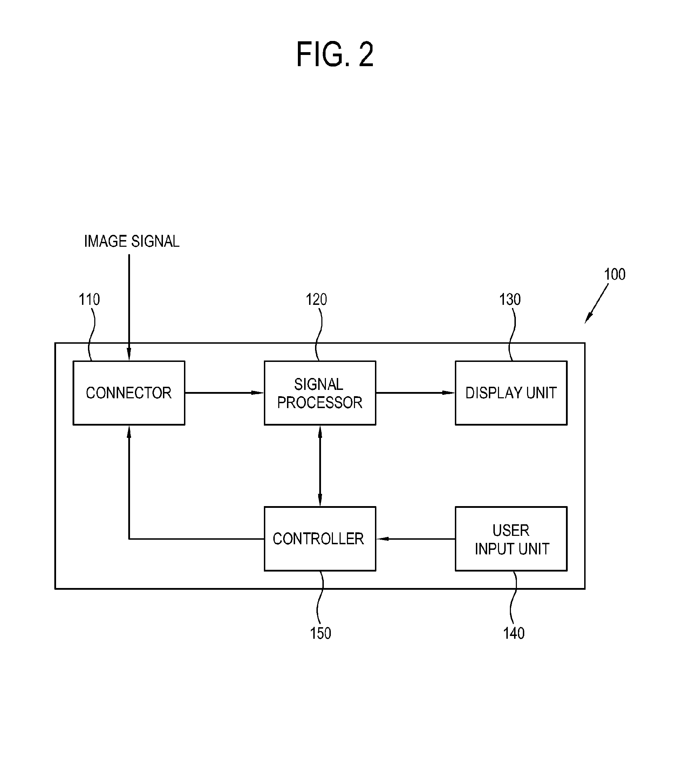

Hereinafter, a detailed configuration of the image processing apparatus 100 will be described with reference to FIG. 2. FIG. 2 is a block diagram of the image processing apparatus 100.

As shown in FIG. 2, the image processing apparatus 100 includes the connector 110, which receives a signal from at least one external input, a signal processor 120 which processes a signal received from an external input through the connector 110 according to a preset process, a display unit 130 which displays an image based on a signal processed by the signal processor 120 if the signal is an image signal, a user input unit 140 which outputs a control signal according to a user manipulation, and a controller 150, which controls operations of the image processing apparatus 100.

The connector 110 receives a signal from an external input and transmits the signal to the signal processor 120. The connector 110 is connected to various external input cables 10, 20 and 30, and receives signals from the external input in a wired manner, or wirelessly receives signals according to preset wireless communication standards.

The connector 110 includes a plurality of connectors (not shown) to which the cables 10, 20 and 30 are individually connected. The connector 110 may receive signals, e.g., broadcasting signals, image signals, or data signals according to HDMI, USB, and a component from the connected external input, or receive communication data through a communication network.

The connector 110 according to the present embodiment may further include various additional elements such as a wireless communication module (not shown) for wireless communication, or a tuner (not shown) to tune a broadcasting signal according to a design type of the image processing apparatus 100, as well as elements to receive signals/data from the external input.

The signal processor 120 processes the signal received through the connector 110, according to preset processing operations. For example, if a signal received through the connector 110 is an image signal, the signal processor 120 processes the image signal according to the image processing operations, and outputs the processed image signal to the display unit 130, on which an image is displayed on the basis of the processed image signal.

The image processing operations of the signal processor 120 may include, but not limited to, a de-multiplexing operation for dividing a predetermined signal by standards, a decoding operation corresponding to an image format of an image signal, a de-interlacing operation for converting an interlace image signal into a progressive image signal, a scaling operation for adjusting an image signal into a preset resolution, a noise reduction operation for improving an image quality, a detail enhancement operation, a frame refresh rate conversion, etc.

If the signal received through the connector 110 is a voice signal or data signal, the signal processor 120 processes the signal corresponding to the standards of the signal. The processing operation by the signal processor 120 may be decided and applicable in consideration of the nature of the signal received though the connector 110, at the design phase of the image processing apparatus 100.

The signal processor 120 is implemented as an image processing board (not shown) which is formed by mounting various chipsets (not shown), memories (not shown), electronic parts (not shown), wirings (not shown), etc. on a printed circuit board (PCB) (not shown) to perform the foregoing image processing operations.

The display unit 130 displays an image based on an image signal output by the signal processor 120. The display unit 130 may be implemented as various display panels including liquid crystal, plasma, light-emitting diode (LED), organic light-emitting diode (OLED), surface-conduction electron-emitter, carbon nano-tube, and nano-crystal. However, the display unit 130 is not limited to the above display panels.

The display unit 130 may further include additional elements, depending on its embodiment type. For example, the display unit 130, as an LCD which does not emit light by itself, may include an LCD panel (not shown), a backlight unit (not shown) to emit light to the LCD panel, and a panel driving substrate (not shown) to drive the LCD panel (not shown).

The user input unit 140 transmits preset various control commands, or unlimited information by a user manipulation and input. The user input unit 140 is implemented as a menu key and an input panel installed in an external part of the image processing apparatus 100, or a remote controller which is separated or spaced from the image processing apparatus 100.

The user input unit 140 may be integrally formed in the display unit 130. If the display unit 130 is a touch screen, a user may touch the input menu (not shown) displayed on the display unit 130 to generate a preset command.

With the foregoing configuration, the image processing apparatus 100 may be consumer electronics (CE) product which is available only when a user inputs a setting value meeting the user usage environment. As a CE product, the image processing apparatus 100 provides service, enabling a user to input a setting value meeting the usage environment or adjust a default setting for various functions if it is initially turned on after being installed in a desired environment by the user. For convenience, the service is called an initial setting service.

In providing the initial setting service for initially setting a plurality of functions of the image processing apparatus 100, the controller 150 sequentially displays on the display unit 130 a plurality of setting images for a user to individually set each function.

For example, the controller 150 displays a first setting image to set a predetermined first function. If a user manipulates the user input unit 140, and sets the first function through the first setting image and sets a command to progress to a next setting sequence, a second setting image for setting a predetermined second function is displayed for a user to set the second function.

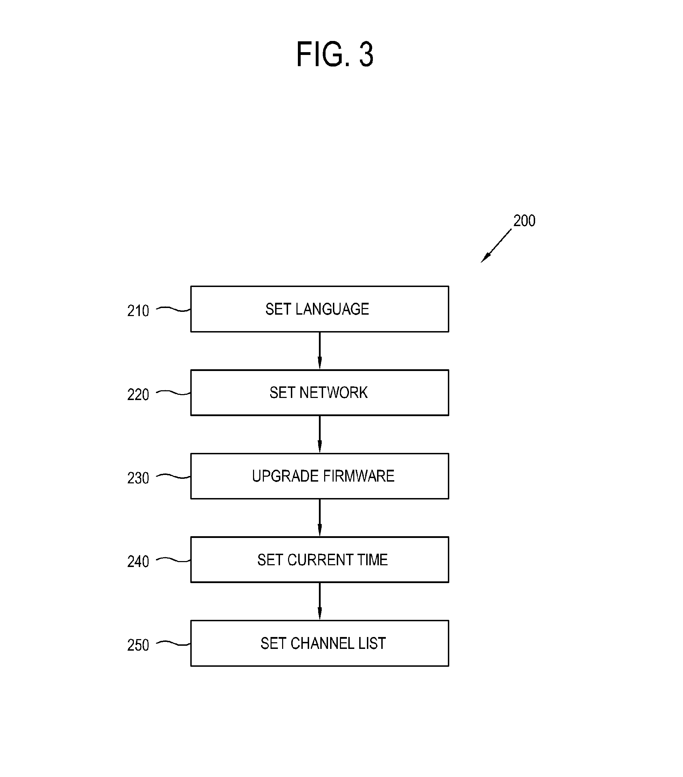

Hereinafter, an example of steps for setting a plurality of functions in the initial setting service 200 of the image processing apparatus 100 will be described with reference to FIG. 3. FIG. 3 illustrates an example of the steps.

As shown in FIG. 3, the initial setting service 200 enables a user to adjust the initial setting of at least a part of functions of the image processing apparatus 100.

The controller 150 sequentially displays a setting image corresponding to respective setting steps 210, 220, 230, 240 and 250 of the initial setting service 200. The respective setting steps 210, 220, 230, 240 and 250 are steps at which the connection setting is performed to receive a signal from an external input.

The controller 150 stores the setting state of the setting steps 210, 220, 230, 240, and 250 through the displayed setting image. The controller 150 displays a setting image corresponding to the next setting steps 210, 220, 230, 240 and 250 according to a progress command to the next setting steps 210, 220, 230, 240 and 250.

The setting steps 210, 220, 230, 240 and 250 of the initial setting service 200 may vary depending on the design type of the image processing apparatus 100 or the type of functions provided by the image processing apparatus 100. The embodiment which will be explained below is an example of embodiments of the initial setting service 200. However, the number, type, or sequence of the respective setting steps 210, 220, 230, 240 and 250 are not limited.

The initial setting service 200 includes a language setting step 210, a network setting step 220, a firmware upgrading step 230, a current time setting step 240, and a channel list setting step 250. The controller 150 sequentially displays a setting image for a user to set the setting steps 210, 220, 230, 240 and 250 for the sequential performance of the setting steps 210, 220, 230, 240 and 250.

The language setting step 210 is a step at which a basic language of a menu provided by the image processing apparatus 100 is set. The available language may include a common language which is used in various countries or organizations, such as Korean, English, German, French, Esperanto, Chinese, and Japanese.

The network setting step 220 is a step at which a connection structure, of the image processing apparatus 100 to a communication network, i.e., wired or wireless connection, is selected. There may be additional options depending on the selection result, e.g., selecting a wireless access point which exists in an area where signals may be received in the case of a wireless network connection.

The firmware upgrading step 230 is a step at which the image processing apparatus 100 downloads the latest version of its firmware from a particular server (not shown) in a network connected to the image processing apparatus 100, and upgrades the firmware with the downloaded firmware.

The current time setting step 240 is a step at which the current time of the area where the image processing apparatus 100 is used is set. At this step, a user selects a standard time slot per area or inputs a manual time slot.

The channel list setting step 250 is a step at which the image processing apparatus 100 maps channels of broadcasting signals, and sets a channel list of the broadcasting signal if it receives the broadcasting signal.

The initial setting service 200, according to the present embodiment, exemplifies only five setting steps 210, 220, 230, 240 and 250. The number of setting steps of the initial setting service 200 may be dozens, as the function or service of the image processing apparatus 100 increases. In this case, a user should perform the initial setting through the setting image at each step, causing inconvenience and requiring excess setting time.

In providing the initial setting service 200, the controller 150 displays a guide image guiding a user to connect the external input to the connector 110. The controller 150 sequentially displays the setting image corresponding to the setting steps 210, 220, 230, 240 and 250 after displaying the guide image, and detects a signal input characteristic of a particular external input connected to the connector 110. According to the detection result, the controller 150 selectively displays the setting image corresponding to the external input. The controller 150 automatically performs the connection setting according to the detection result, rather than displaying the setting image corresponding to the external input.

Then, while the initial setting service 200 of the image processing apparatus 100 is performed, user manipulation work on the setting steps 210, 220, 230, 240 and 250 is reduced, and the setting time for the initial setting service 200 may be reduced.

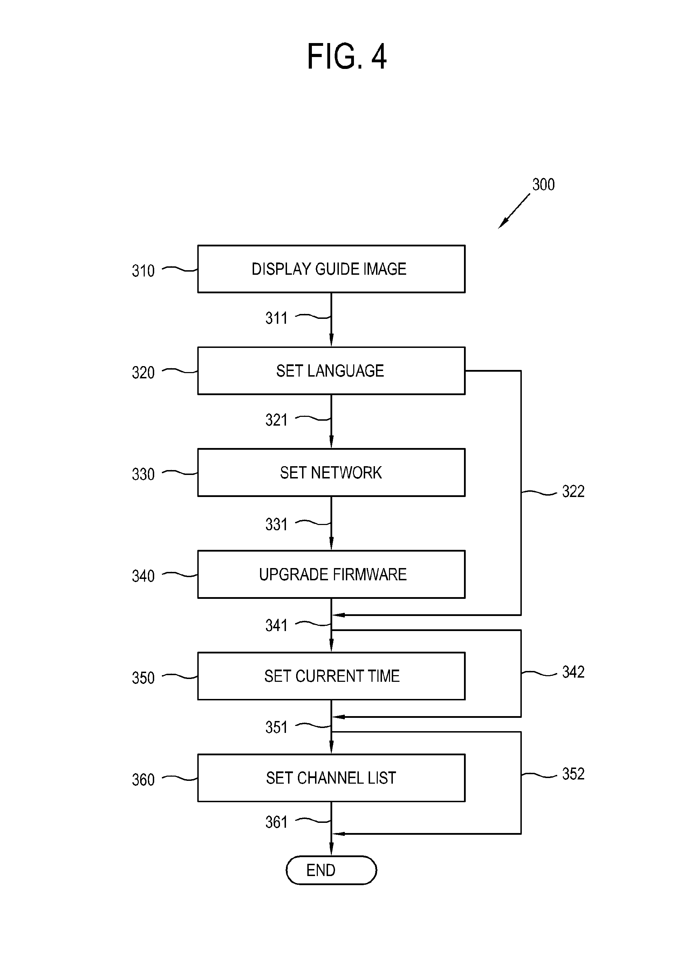

Hereinafter, a process of the initial setting service 300 according to the present embodiment will be described with reference to FIG. 4. FIG. 4 illustrates an example of steps for setting a plurality of functions of an initial setting service 300 of the image processing apparatus 100 according to the present embodiment. Respective setting steps of the initial setting service 300, according to the present embodiment, apply the case in FIG. 3.

As shown in FIG. 4, respective setting steps 320, 330, 340, 350 and 360 of the initial setting service 300 of the image processing apparatus 100 are sequentially provided from a language setting step 320 to a channel list setting step 360. The controller 150 displays a guide image on the display unit 130 (311).

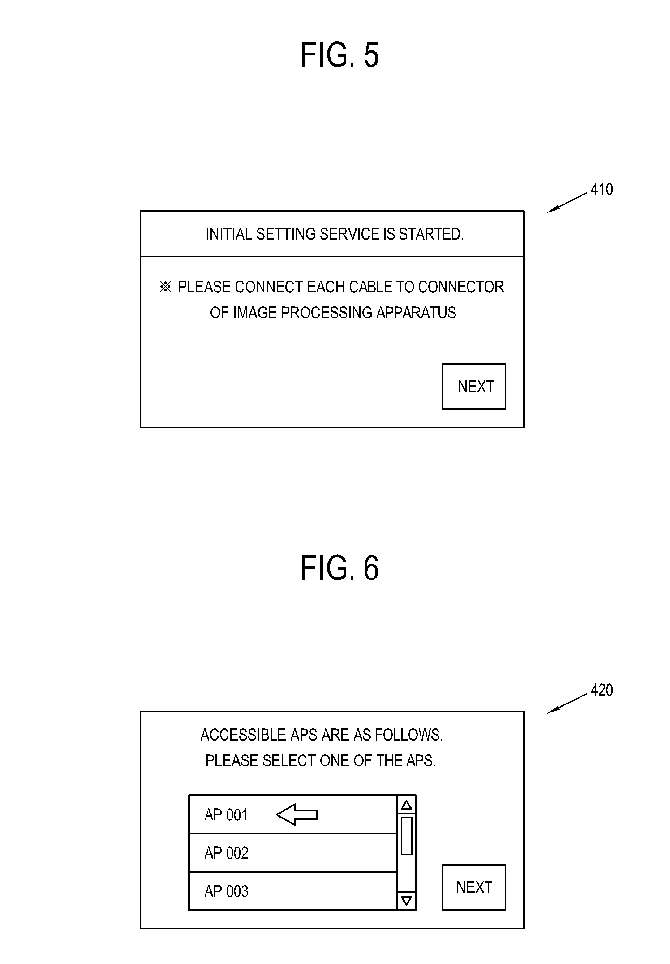

A guide image 410 (refer to FIG. 5) includes a guiding message for a user to connect an external input, such as a cable, etc. to the connector 110 prior to starting the initial setting service 300. A user connects various types of external input cables to the connector 110 following the guide image 410, and then progresses to the next setting step 320 of the initial setting service 300.

While the initial setting service 300 is progressed from the guide image displaying step 310 to the language setting step 320 (311), the controller 150 detects the state of the external input connected to the connector 110. In other words, the controller 150 detects the signal input characteristic of the external input connected to the image processing apparatus 100, after the guide image displaying step 310. For example, the controller 150 may detect whether a communication network is connected in a wired or wireless manner, or receives a broadcasting signal from the outside as an example of detecting the signal input characteristic.

Upon receiving a command to progress to the next step 330 after the language is set at the language setting step 320, the controller 150 performs a selective control operation according to the detection result of the signal input characteristic of the previous external input.

If it is detected that the communication network is connected to the connector 110 in a wired manner, the controller 150 progresses to the network setting step 330 (321), and automatically performs the network setting according to the detection result rather than displaying the setting image for the network setting at the network setting step 330. The controller 150 then progresses to the firmware upgrading step 340 (331), and downloads the firmware and upgrades its firmware with the downloaded firmware based on the network environment set at the previous network setting step 330. The controller 150 progresses to the current time setting step 350 (341).

If it is detected that the communication network is connected to the connector 110 in a wireless manner, the controller 150 displays a setting image 420 (refer to FIG. 6) to select the wireless access point (not shown) to establish a wireless network with the image processing apparatus 100. If the wireless access point is selected through the setting image 420, the controller 150 establishes the wireless network through the selected wireless access point (not shown), and progresses to the next setting step 340(331).

If it is detected that no wired/wireless network is connected to the connector 110, the controller 150 interprets the user as having no intention to use the communication network, and skips the network setting step 330 and the firmware upgrading step 340 (322).

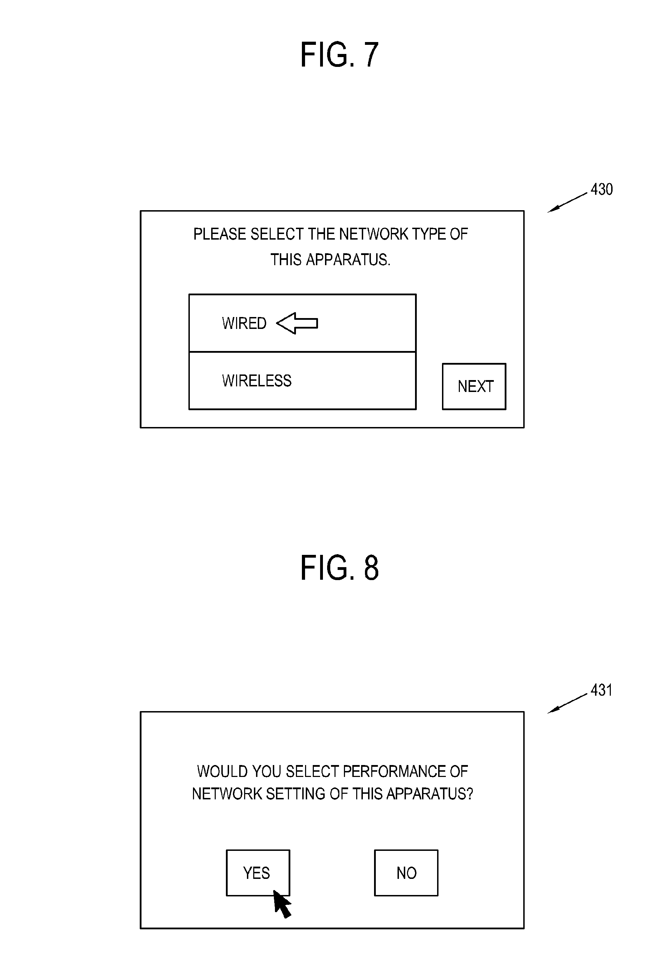

Different embodiments are also possible depending on the design method. If it is detected that no wired/wireless network is connected to the connector 110, the controller 150 may display a setting image 430 (refer to FIG. 7) for network setting.

If it is detected that no wired/wireless network is connected to the connector 110, the controller 150 may display a setting image 431 (refer to FIG. 8) to request the user whether to perform the network setting. If a user inputs a selection to perform the network setting through the setting image 431, the controller 150 displays the setting image 430 in FIG. 7. If a user inputs a selection to not perform the network setting through the setting image 431, the controller 150 interprets the user as having no intention to use the communication network, and skips the network setting step 330 and the firmware upgrading step 340 (322).

At the time when the initial setting service 300 is progressed from the firmware upgrading step 340 to the current time setting step 350 (341), the controller 150 may obtain the value of current time through the broadcasting signal, or the network detected according to the detection result. In this case, the controller 150 automatically sets the current time of the image processing apparatus 100 with the obtained time value (342).

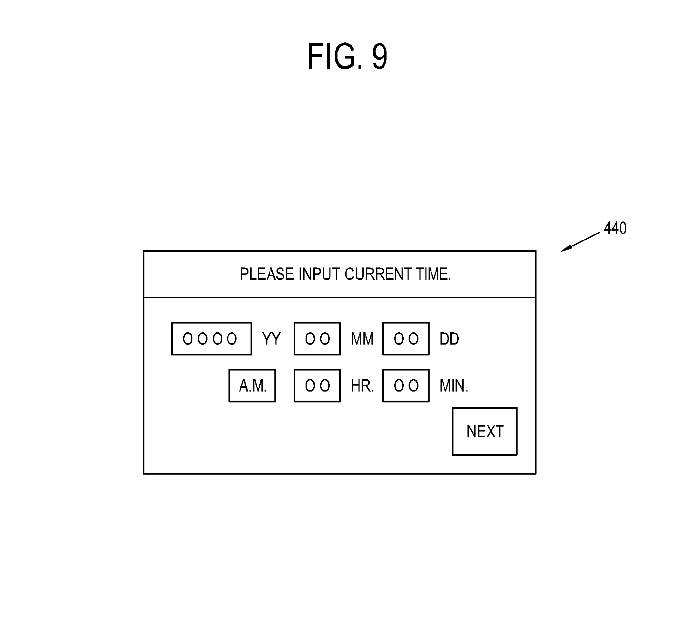

The controller 150 may determine that the broadcasting signal or network is not connected, or determine that the value of the current time may not be obtained. In this case, the controller 150 displays a setting image 440 (refer to FIG. 9) for setting the current time at the current time setting step 350, so that a user may input the current time through the setting image 440.

When the initial setting service 300 is progressed from the current time setting step 350 to the channel list setting step 360 (351), the controller 150 may determine that the broadcasting signal is received according to the previous detection result. In this case, the controller 150 generates a channel list based on the broadcasting signal at the channel list setting step 360, and progresses to an ending step 361. At the channel list setting step 360, an additional setting image may be displayed to generate or change the channel list.

If it is determined that no broadcasting signal is received, the controller 150 skips the channel list setting step 360, and directly progresses to the ending step 361 (352).

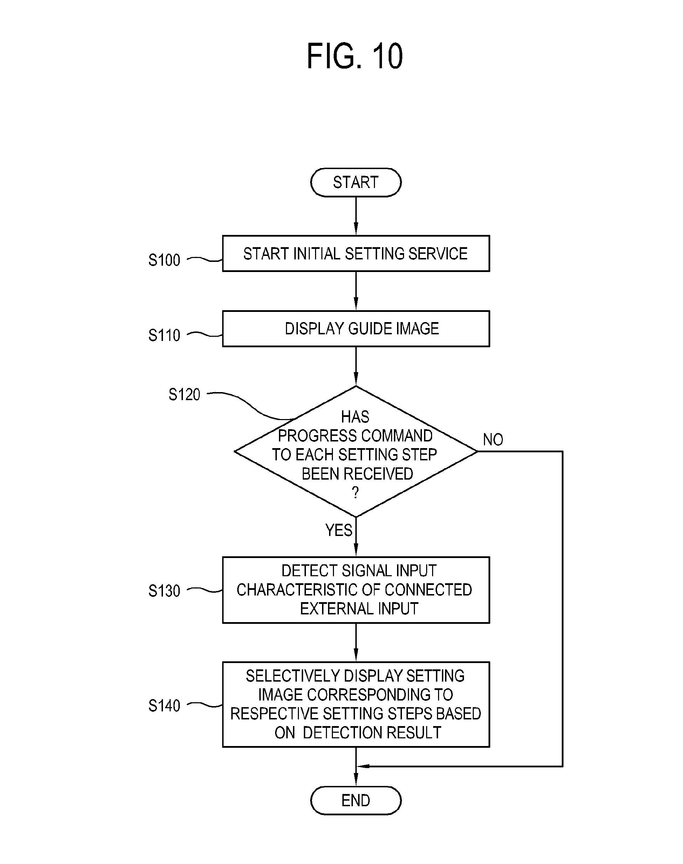

Hereinafter, a control method of the image processing apparatus 100 according to the present embodiment will be described with reference to FIG. 10. FIG. 10 is a control flowchart of the control process.

As shown in FIG. 10, as the initial setting service is started (S100), the image processing apparatus 100 displays the guide image (S110). The guide image is shown in FIG. 5.

If the progress command is received after the guide image is displayed (S120), the image processing apparatus 100 detects the signal input characteristic of the external input connected to the image processing apparatus 100 (S130).

While the setting steps are performed, the image processing apparatus 100 selectively displays the setting image corresponding to the respective setting steps based on the detection result (S140).

Then, the image processing apparatus 100 may provide the initial setting service, which ensures user convenience.

In the foregoing embodiment, the detection of the external input is performed at the time when the initial setting service is progressed to the first setting step and after the guide image is displayed. However, as long as the time when the detection of the external input is after the guide image is displayed, and before the external input setting step, any particular time may be set.

In the foregoing embodiment, the image processing apparatus 100 includes the display unit 130, but the concept of the exemplary embodiments may also apply to the case where the image processing apparatus 100 does not include the display unit 130. For example, the image processing apparatus 100 may be a set-top box connected to an additional TV outputs a generated setting image to the external TV, on which the setting image is displayed.

Although a few exemplary embodiments have been shown and described, it will be appreciated by those skilled in the art that changes may be made in these exemplary embodiments without departing from the principles and spirit of the exemplary embodiments, the range of which is defined in the appended claims and their equivalents.

## Claims

1. An image processing apparatus comprising:
a connector which receives a signal by at least one external input;
a signal processor which processes the signal received by the at least one external input through the connector, according to a preset process, and displays an image on a display unit based on the signal; and
a controller which displays a guide image guiding a user to connect the at least one external input to the connector, sequentially displays on the display unit a setting image of the at least one external input to sequentially perform a connection setting for the connector to receive the signal from the at least one external input after the guide image is displayed, detects a signal input characteristic of a first external input connected to the connector after the guide image is displayed, and selectively displays the setting image corresponding to the first external input according to the detection result.

2. The image processing apparatus according to claim 1, wherein the controller automatically performs the connection setting according to the detection result rather than displaying the setting image corresponding to the first external input while the setting image of the at least one external input is sequentially displayed.

3. The image processing apparatus according to claim 1, wherein the first external input comprises a wired or wireless network connection, and the controller performs a connection setting of a wired network and the image processing apparatus rather than displaying a first setting image for setting a network connection if it is detected that the wired network is connected to the connector, and displays a second setting image for setting a wireless network connection of the image processing apparatus if it is detected that the wireless network is connected to the connector.

4. The image processing apparatus according to claim 3, wherein the controller displays the first setting image if it is detected that a wired or wireless network is not connected to the connector, and sets a network connection of the image processing apparatus according to an input through the first setting image.

5. The image processing apparatus according to claim 3, wherein the controller does not display the first setting image nor set the network connection of the image processing apparatus if it is detected that the wired or wireless network is not connected to the connector.

6. The image processing apparatus according to claim 3, wherein the first setting image is provided to select one of a wired network and a wireless network.

7. The image processing apparatus according to claim 3, wherein the controller displays a third setting image for receiving a user's input regarding the setting of the network connection if it is detected that the wired or wireless network is not connected to the connector.

8. The image processing apparatus according to claim 1, wherein the first external input comprises a reception cable connection of a broadcasting signal, and the controller displays a fourth setting image for setting a channel list based on the broadcasting signal if it is detected that a reception cable of the broadcasting signal is connected to the connector, and skips displaying the fourth setting image if it is detected that the reception cable of the broadcasting signal is not connected to the connector.

9. The image processing apparatus according to claim 1, further comprising a user input unit, wherein the controller progresses from the guide image to the at least one setting image or progresses from one of the plurality of setting images to another one of the plurality of setting images according to manipulation of the user input unit.

10. A control method of an image processing apparatus comprising:
displaying a guide image to guide a user to connect at least one external input to a connector which receives a signal by the at least one external input; and
sequentially displaying a setting image of the at least one external input to sequentially perform a connection setting so that the connector receives the signal from the at least one external input;
the sequentially displaying the setting image comprising;
detecting a signal input character of a first external input connected to the connector after the guide image is displayed; and
selectively displaying the setting image corresponding to the first external input according to the detection result.

11. The control method according to claim 10, wherein the selectively displaying the setting image corresponding to the first external input according to the detection result comprises automatically performing the connection setting according to the detection result rather than displaying the setting image corresponding to the first external input.

12. The control method according to claim 10, wherein the first external input comprises a wired or wireless network connection, and the selectively displaying the setting image corresponding to the first external input according to the detection result comprises performing a connection setting between the wired network and the image processing apparatus rather than displaying a first setting image to perform a network connection setting if it is detected that the wired network is connected to the connector, and displaying a second setting image to perform a wireless network connection setting of the image processing apparatus if it is detected that the wireless network is connected to the connector.

13. The control method according to claim 10, wherein the first external input comprises a reception cable connection of a broadcasting signal, and the selectively displaying the setting image corresponding to the first external input according to the detection result comprises displaying a fourth setting image for setting a channel list based on the broadcasting signal if it is detected that a reception cable of the broadcasting signal is connected to the connector, and skipping displaying the fourth setting image if it is detected that the reception cable of the broadcasting signal is not connected to the connector.
